# EUROPÄISCHE PATENTSCHRIFT

(11) **EP 3 446 370 B1**
(45) Veröffentlichungstag und Bekanntmachung des Hinweises auf die Patenterteilung: **19.01.2022**
(21) Anmeldenummer: 16718654.3
(22) Anmeldetag: 22.04.2016
(51) Int. Cl.: H01R 13/44

(54) **VORRICHTUNG ZUM SCHUTZ VON IN FAHRZEUGEN ANGEORDNETEN ELEKTRISCHEN BUCHSEN**
DEVICE FOR PROTECTING ELECTRIC SOCKETS ARRANGED IN VEHICLES
DISPOSITIF DE PROTECTION DE PRISES ÉLECTRIQUES INSTALLÉES DANS DES VÉHICULES

(43) Veröffentlichungstag der Anmeldung: 27.02.2019
(73) Patentinhaber: Anton Clemens Automotive GmbH, 51429 Bergisch Gladbach (DE)
(72) Erfinder: BUCHHALTER, Thomas, 53859 Niederkassel (DE)
(74) Vertreter: Hennicke, Ernst Rüdiger
(86) Internationale Anmeldenummer: PCT/EP2016/059075
(87) Internationale Veröffentlichungsnummer: WO 2017/182098

(56) Entgegenhaltungen:
- EP-A1- 2 876 741
- CN-U- 204 527 066
- DE-U1-202012 009 432
- DE-U1-202014 001 790
- DE-U1-202015 103 280
- GB-A- 2 506 842
- US-A- 4 669 281
- US-A1- 2008 214 022

## Beschreibung

Die Erfindung betrifft eine Vorrichtung zum Schutz von in Fahrzeugen angeordneten elektrischen Buchsen nach Anspruch 1.

In Fahrzeugen existieren sogenannte OBD Diagnosebuchsen. Dies ist eine genormte Schnittstelle, über die in einer Fachwerkstatt Fehlermeldungen des Fahrzeugs abgefragt werden können. Autodiebe nutzen häufig die OBD Diagnosebuchse, um mittels eines externen Gerätes auf den Fahrzeugcomputer zuzugreifen. Mittels des externen Gerätes ist es dabei möglich, den Fahrzeugcomputer derart zu manipulieren, dass das Fahrzeug auch ohne berechtigten Schlüssel in den fahrbereiten Zustand versetzt wird.

Es sind verschiedene Vorrichtungen zum Schutz von den in Fahrzeugen angeordneten elektrischen Buchsen, insbesondere für OBD-Diagnosebuchsen bekannt, bei denen die Buchsen vor elektrischer Kontaktierung und damit vor einen unberechtigten Zugriff geschützt werden. Die bekannten Vorrichtungen bestehen aus einer Vielzahl von Einzelteilen, welche in dem zu schützenden Fahrzeug installiert werden müssen. Insbesondere sind Schutzvorrichtungen bekannt, bei welchen zur Installation der Schutzvorrichtung zuvor die fahrzeugseitigen Buchsen ausgebaut werden müssen. Es besteht jedoch zunehmend Bedarf, die Vorrichtung zu vereinfachen und derart auszugestalten, dass die Haltbarkeit verbessert wird und insbesondere der Installationsaufwand reduziert wird.

Die US 2008/0214022 A offenbart eine Schutzvorrichtung für eine OBD Schnittstelle von Fahrzeugen. Es wird eine Abdeckvorrichtung beschrieben, die von der Vorderseite der OBD Schnittstelle auf deren Körper aufgeschoben wird und mittels einer Schließplatte an der OBD Schnittstelle befestigt wird.

Aus der DE 20 2014 001790 U1 ist eine Schutzvorrichtung nach dem Oberbegriff des Anspruchs 1 bekannt. Bei der bekannten Vorrichtung wird der OBD Stecker in einer zu der Schutzvorrichtung gehörenden, angepassten Steckergehäuse-Unterteil aus Leichtmetall eingebaut, das randseitig mit Montagegewinden versehen ist, an denen ein Steckergehäuse-Oberteil aus Stahl mit Befestigungsschrauben montiert werden kann. Das Oberteil hat seitlich angeordnete Laschen, die in Führungen im Unterteil hineinreichen und eine seitliche Demontage verhindern. Das Oberteil wird weiter über ein Schiebesystem mit einer Schwalbenschwanzführung mit dem Unterteil verbunden, das im montierten Zustand über ein Schloss gesichert wird, das mittels eines seitlich einführbaren Schlüssel betätigt werden kann.

Die GB 2 506 842 A offenbart eine Schutzvorrichtung für OBD Buchsen mit einer auf diese aufsetzbaren Abdeckkappe, die an ihrer der Buchse zugewandten Seite mit mehreren in die Buchse einsteckbaren Riegelzapfen versehen ist, die simultan mittels eines schlüsselbetätigten Zahnstangentriebs verstellbar sind und hierdurch die Abdeckung an der Buchse gegen unbefugte Entfernung sichern.

Aus der DE 20 2012 009 432 U1 ist ein OBD Schloss bekannt, bei dem die OBD Schnittstelle mit einem diese abdeckenden Gehäuse versehen werden kann, in das ein mittels eines Schlüssels mit mechanischer Kodierung bedienbares Schloss integriert ist, das die Schutzeinrichtung mit Hilfe eines Befestigungselements in Form einer am Schloss angeschweißten Schraube mit der OBD Schnittstelle lösbar verbindet. Zum Hintergrund der Erfindung wird schließlich auch noch auf die EP 2 876 741 B und die CN 204 527 066 U verwiesen.

Der Erfindung liegt die Aufgabe zu Grunde, eine verbesserte und gleichzeitig vereinfachte Vorrichtung zum Schutz von in Fahrzeugen angeordneten elektrischen Buchsen zu schaffen, die gleichzeitig vereinfacht installiert werden kann.

Zur Lösung dieser Aufgabe dienen die Merkmale des Anspruchs 1.

Die Erfindung sieht in vorteilhafter Weise vor, dass mindestens eine Abdeckeinrichtung und mindestens ein Sicherungselement vorgegeben sind, wobei die Abdeckeinrichtung mit Hilfe des Sicherungselements in dem Gehäusekörper der fahrzeugseitigen Buchse befestigbar ist, so dass die Abdeckeinrichtung einen Zugriff auf die Kontakte der Buchse verhindert. Das mindestens eine Sicherungselement der Abdeckeinrichtung wird dabei direkt in oder am dem Gehäusekörper der zu schützenden Buchse befestigt. Die unmittelbare Befestigung des mindestens einen Sicherungselements in dem Gehäusekörper der zu schützenden fahrzeugseitigen Buchse weist dabei den Vorteil auf, dass die Buchse zur Installation der Schutzvorrichtung insbesondere nicht ausgebaut werden muss. Das mindestens eine Sicherungselement kann dabei in bereits in der elektrischen Buchse vorhandene Vertiefungen oder Aussparungen in dem Gehäusekörper eingefügt und in diesen befestigt werden.

Das mindestens eine Sicherungselement wird durch mindestens eine Schraube mit Schraubenkopf gebildet, wobei in der Abdeckeinrichtung mindestens ein Kanal zur Aufnahme der mindestens einen Schraube ausgebildet ist und wobei die Schraube in den Gehäusekörper der Buchse, vorzugsweise in Aussparungen des Gehäusekörpers einschraubbar ist. Die mindestens eine Schraube wird in dem Kanal der Abdeckeinrichtung derart hindurchgeführt, dass nach dem Festziehen der Schraube ein kraftschlüssiger Verbund zwischen der Abdeckeinrichtung und der Buchse besteht. Die direkte Verschraubung der Abdeckeinrichtung über mindestens eine Schraube mit dem Gehäusekörper der Buchse weist dabei den Vorteil auf, dass eine sichere Verbindung zwischen der Abdeckeinrichtung und der fahrzeugseitigen Buchse gewährleistet ist. Weiterhin weist diese Konfiguration den Vorteil auf, dass bei dem Versuch des gewaltvollen Entfernens der Abdeckeinrichtung durch externe Kraftanwendung die elektrische Buchse gleichzeitig zerstört wird. Durch die Zerstörung der Buchse in Folge der Gewalteinwirkung wird auch nachfolgend ein elektrischer Zugriff auf die elektrischen Kontakte der Buchse sicher vermieden.

Die mindestens eine Schraube weist einen mechanisch kodierten Schraubenkopf auf.

Gemäß der Erfindung ist zwischen der Abdeckeinrichtung und der Buchse ein zusätzlicher Verbindungskörper angeordnet, welcher einerseits in die Aussparungen und/oder Vertiefungen der Buchse eingreift und andererseits an die Abdeckeinrichtung angepasst ist.

Erfindungsgemäß ist dabei die Anordnung so getroffen, dass an dem Verbindungskörper mindestens ein an die mindestens eine Schraube angepasster Spreizkörper nach Art eines Spreizdübels ausgeprägt ist, wobei bei dem Befestigen der Abdeckeinrichtung in dem Gehäusekörper der Buchse mittels Einschrauben der Schraube der Spreizkörper sich innerhalb einer Aussparung oder Vertiefung der Buchse aufspreizt und mit dieser eine Reibschlussverbindung bildet.

Der Verbindungskörper kann dabei aus einem Kunststoffmaterial gebildet sein.

Die mindestens eine Schraube kann sich bei dem erstmaligen Einschrauben in den Gehäusekörper der Buchse einschneiden. Dies hat den Vorteil, dass eine direkte Kraftübertragung zwischen der mindestens einen Schraube und dem Gehäusekörper der fahrzeugseitigen Buchse stattfindet. Weiterhin ist es zur Installation der Schutzvorrichtung nicht notwendig zusätzliche Bohrungen zur Installation der Schutzvorrichtung vorzunehmen. Die mindestens eine Schraube schneidet bei dem erstmaligen Einschrauben die notwendigen Gewindegänge in dem Gehäusekörper der Buchse ein. Bei nachfolgenden Installationen der Schutzvorrichtung in dem Fahrzeug können die bei der erstmaligen Installation eingeschnittenen Gewindegänge im Gehäusekörper zur Installation erneut genutzt werden.

Es kann ein Werkzeugschlüssel vorgesehen sein, mit dem das mindestens eine Sicherungselement lösbar und anziehbar ist. Der Werkzeugschlüssel kann Teil der Schutzvorrichtung sein. Der Werkzeugschlüssel kann ein mechanisch kodierter Werkzeugschlüssel sein, der an den mechanisch kodierten Schraubenkopf der mindestens einen Schraube angepasst ist, so dass die mindestens eine Schraube lediglich mit dem an den mechanisch kodierten Schraubenkopf angepassten mechanisch kodierten Werkzeugschlüssel lösbar und anziehbar ist.

Ein mechanisch kodierter Schraubenkopf bzw. Werkzeugschlüssel bedeutet, dass der Schraubenkopf bzw. der Werkzeugschlüssel eine spezielle vordefinierte geometrische Form aufweisen. Zum Lösen eines mechanisch kodierten Schraubenkopfes mittels des Werkzeugschlüssels kann dieser lediglich an einer einzigen Steckposition auf den mechanisch kodierten Schraubenkopf aufsteckbar sein. Der mechanisch kodierte Schraubenkopf und der entsprechend angepasste mechanisch kodierte Werkzeugschlüssel bilden eine formschlüssige Verbindung, wobei die aufgebrachten Kräfte bzw. Drehmomente von dem Werkzeugschlüssel über den mechanisch kodierten Schraubenkopf auf die mindestens eine Schraube aufbringbar sind. Die mechanische Kodierung sowohl des Schraubenkopfes als auch des Werkzeugschlüssels erfolgt dabei über die Vorsehung von einander angepassten geometrischen Formen. Die geometrischen Formen weisen dabei eine Vielzahl von Variationsmöglichkeiten auf, aufgrund der Vielzahl an Variationsmöglichkeiten kann eine Vielzahl von unterschiedlichen, mechanisch kodierten Schraubenköpfen und Werkzeugschlüsseln gebildet werden. Lediglich aneinander angepasste, mechanisch kodierte, übereinstimmende geometrische Formen an Schraubenkopf und Werkzeugschlüssel können zum Lösen oder Anziehen der mindestens einen Schraube genutzt werden.

Durch die Variationsmöglichkeiten der mechanischen Kodierung wird, wie bei einem konventionellen Schlüssel, eine Vielzahl von unterschiedlichen Ausprägungen der mechanischen Kodierung gebildet. Dadurch bedingt, passt ein mechanisch kodierter Werkzeugschlüssel lediglich auf den entsprechend kodierten Schraubenkopf. Aufgrund einer hohen Anzahl an unterschiedlichen Ausprägungen der mechanischen Kodierung wiederholt sich die gleiche Form lediglich erst nach einer hohen Anzahl von Schraubenköpfen bzw. Werkzeugschlüsseln, vorzugsweise erst nach mehr als 300 Stück.

Der Werkzeugschlüssel kann einen Handgriff aufweisen, worüber Drehmomente über einen Hohlzylinder mit Vorsprüngen an den mechanisch kodierten Schraubenkopf der Schraube übertragbar sind. Der Werkzeugschlüssel kann dabei in einer Ausführungsform einstückig ausgeführt sein, so dass der Handgriff mit dem Hohlzylinder mit den Vorsprüngen untrennbar verbunden ist. In einer alternativen Ausführungsform kann der Werkzeugschlüssel mehrstückig ausgeführt sein, so dass insbesondere der Hohlzylinder mit den Vorsprüngen von dem Handgriff trennbar ist. Die Trennstelle kann dabei in Form eines Vierkants haben, also wie bei einer konventionellen Stecknuss ausgeführt sein.

Durch die mechanische Kodierung und entsprechende Anpassung des Schraubenkopfes und Werkzeugschlüssels wird zwischen der Schraube und dem Werkzeugschüssel eine Schlüssel-Schloss-Funktion gebildet. Somit ist es lediglich möglich, die mindestens eine Schraube mit mechanisch kodiertem Schraubenkopf mit dem entsprechenden mechanisch kodierten Werkzeugschlüssel zu lösen. Aufgrund der Vielzahl der Variationsmöglichkeiten der mechanischen Kodierung wiederholt sich die gleiche mechanische Kodierung an dem Schraubenkopf und Werkzeugschlüssel erst nach vielen unterschiedlichen Variationen. Der Inhaber eines mechanisch kodierten Werkzeugschlüssels ist somit lediglich in der Lage, die mindestens eine Schraube mit entsprechend angepasstem mechanisch kodierten Schraubenkopf zu lösen bzw. anzuziehen.

Der mechanisch kodierte Schraubenkopf kann dabei durch einen zylindrischen Körper mit mindestens einer an dem Umfang des Schraubenkopfes angeordneten Ausnehmung gebildet sein und der mechanisch kodierte Werkzeugschlüssel kann einen an den Umfang des Schraubenkopfes angepassten Hohlzylinder mit mindestens einem an die mindestens eine Ausnehmung des Schraubenkopfes angepassten Vorsprung aufweisen. Der mechanisch kodierte Schraubenkopf weist dabei an seinem Umfang mindestens eine geometrisch ausgeformte Ausnehmung auf. Aufgrund der besonderen Ausgestaltung des Umfangs des mechanisch kodierten Schraubenkopfes wird grundsätzlich das Aufsetzen und Anziehen bzw. Lösen der Schraube über einen konventionellen Werkzeugschlüssel wie beispielsweise einen Innensechskant vermieden. Durch die Anordnung von einer oder mehrerer Ausnehmungen unter gleichzeitiger geometrischer Variation der angeordneten Ausnehmungen wird eine Vielzahl von unterschiedlichen Ausgestaltungen für die mechanische Kodierung des Schraubenkopfes gebildet. Der mechanisch kodierte Werkzeugschlüssel weist dann an die Ausnehmungen des Schraubenkopfes angepasste Vorsprünge auf.

Die mechanische Kodierung des Schraubenkopfes und/oder des Werkzeugschlüssels kann dabei auch über die Vorsehung von Aussparungen und entsprechend angepassten Stiften erfolgen. Weiterhin ist denkbar, eine mechanische Kodierung zwischen Schraubenkopf und Werkzeugschlüssel mit einer variierenden vorspringenden Kontur und einer entsprechenden formschlüssigen Aussparung an dem gegenüberliegenden Teil vorzusehen.

Der Schraubenkopf der mindestens einen Schraube kann dabei in der Abdeckeinrichtung versenkt angeordnet sein, so dass die Schraubenkopfoberfläche plan mit der der Buchse abgewandten ersten Oberfläche der Abdeckeinrichtung oder gegenüber der ersten Oberfläche der Abdeckeinrichtung in Richtung der Buchse zurückgezogen ist. Die versenkte bzw. zurückgezogene Anordnung des Schraubenkopfes weist dabei den Vorteil auf, dass ein konventionelles Werkzeug wie beispielsweise eine Greifzange oder eine Spitzzange nicht an den Schraubenkopf angesetzt werden kann. Ein Lösen bzw. Anziehen der mindestens einen Schraube mittels eines konventionellen Werkzeugs wird somit verhindert. Die versenkte Anordnung der mindestens einen Schraube kann über die Vorsehung einer an den Durchmesser des Schraubenkopfes angepassten Stufenbohrung im Bereich des Kanals in der Abdeckvorrichtung realisiert werden. Die Ausnehmung bzw. Stufenbohrung zur Aufnahme des Schraubenkopfes kann dabei derart ausgestaltet sein, dass lediglich der mechanisch kodierte Werkzeugschlüssel auf den mechanisch kodierten Schraubenkopf zum Lösen oder Anziehen der mindestens einen Schraube aufgesetzt werden kann.

Die Abdeckeinrichtung kann in dem mindestens einen Kanal zur Aufnahme der Schraube ein an das Außengewinde der Schraube angepasstes Innengewinde aufweisen, wobei das Innengewinde ein Durchdrehen der Schraube in dem Gehäusekörper der Buchse verhindert. Die Vorsehung eines Innengewindes weist dabei zunächst den Vorteil auf, dass auf die mindestens eine Schraube während des Anziehens ein hohes Anzugsdrehmoment aufgebracht werden kann. Durch die Führung der Schraube über ein Innengewinde in der Abdeckeinrichtung wird jedoch die Übertragung einer zu hohen Vorspannkraft von der Schraube auf den Gehäusekörper der Buchse verhindert. Dies hat den Vorteil, dass eine Zerstörung der fahrzeugseitigen Buchse über das Durchdrehen der mindestens einen Schraube wirksam verhindert wird. Weiterhin wird über die Vorsehung des Innengewindes in der Abdeckeinrichtung ein Endanschlag für die mindestens eine Schraube gebildet. Dies weist den Vorteil auf, dass die mindestens eine Schraube zur Befestigung der Abdeckeinrichtung lediglich bis zu einer definierten Eindringtiefe in die fahrzeugseitige Buchse eingeschraubt werden kann. Eine Beschädigung des Gehäusekörpers der Buchse und/oder der Fahrzeugelektronik aufgrund eines zu tiefen Einbringens der mindestens einen Schraube in den Gehäusekörper der Buchse wird hierdurch verhindert.

Die der Buchse zugewandte zweite Oberfläche der Abdeckeinrichtung kann an die Form und Abmessungen der fahrzeugseitigen Buchse angepasst sein. Dies hat den Vorteil, dass die Abdeckeinrichtung beispielsweise zur Installation an der Buchse vorgesteckt werden kann. Weiterhin wird durch die Anpassung der Form und Abmessungen der Abdeckeinrichtung an die Buchse ein formschlüssiger Verbund zwischen der zu schützenden Buchse und der Abdeckeinrichtung gebildet. Aufgrund des vorgenannten Formschlusses wird das gewaltsame Entfernen der Abdeckeinrichtung über Gewalteinwirkung durch externe Dritte weiterhin unterbunden. Bei dem Versuch der Entfernung der Abdeckvorrichtung mittels externer Gewalteinwirkung würde aufgrund des Formschlusses zwischen Abdeckeinrichtung und der Buchse die fahrzeugseitige Buchse irreparabel beschädigt. Ein unberechtigter Zugriff auf die elektrischen Kontakte der Buchse wird hierdurch sicher verhindert.

Die Abdeckeinrichtung kann den Gehäusekörper der Buchse seitlich umgreifen. Diese Ausführungsform hat den Vorteil, dass die über die Abdeckeinrichtung geschützte Buchse nicht durch seitliches Aufsägen oder Aufbrechen entfernt werden kann.

Die Abdeckeinrichtung oder das mindestens eine Sicherungselement kann aus einem Metall, vorzugsweise aus einem gehärteten Stahl, gebildet werden.

Die Abdeckeinrichtung kann zwei Kanäle zur Aufnahme von zwei Sicherungselementen zur Befestigung der Abdeckvorrichtung an dem Gehäusekörper der Buchse aufweisen.

Die Abdeckeinrichtung kann in die Aussparungen und/oder Vertiefungen der Buchse eingreifen.

Die mechanische Kodierung des Werkzeugschlüssels kann an die mechanische Kodierung der beiden Schrauben zur Installation der Abdeckeinrichtung an der fahrzeugseitigen Buchse kodiert sein.

Im Folgenden werden unter Bezugnahme auf die Zeichnungen Ausführungsbeispiele der Erfindung näher erläutert:
- Fig. 1: zeigt eine Vorrichtung zum Schutz von in Fahrzeugen angeordne-ten, elektrischen Buchsen,
- Fig. 2: zeigt die Schutzvorrichtung im installierten Zustand an der fahrzeugseitigen Buchse,
- Fig. 3a: zeigt ein erstes Ausführungsbeispiel einer mechanisch kodierten Schraube,
- Fig. 3b: zeigt eine erste alternative Ausführungsform einer mechanisch kodierten Schraube,
- Fig. 3c: zeigt eine zweite alternative Ausführungsform einer mechanisch kodierten Schraube,
- Fig. 4: zeigt eine schematische Darstellung der Anordnung zur Installation der Schutzvorrichtung an einer fahrzeugseitigen Buchse,
- Fig. 5: zeigt ein erfindungsgemäßes Ausführungsbeispiel zur Installation einer Schutzvorrichtung an einer fahrzeugseitigen Buchse in einer schematischen Darstellung.

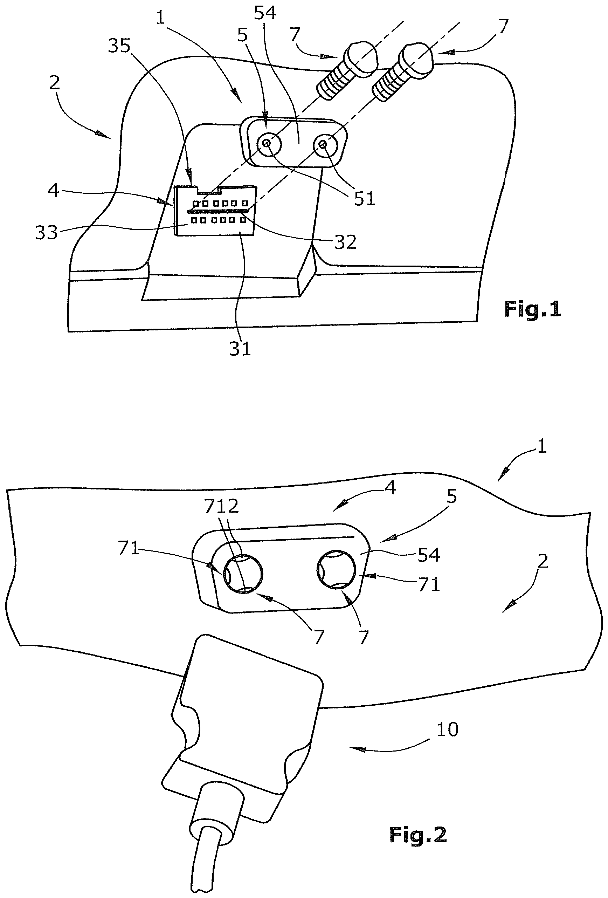

Die Fig. 1 zeigt eine Schutzvorrichtung 1 für eine in einem Fahrzeug 2 angeordnete OBD-Diagnosebuchse 4. Die OBD-Diagnosebuchse 4 weist dabei einen Gehäusekörper 31 mit darin angeordneten, mehreren elektrischen Kontakten 35 sowie Aussparungen 32 und Vertiefungen 33 auf. Die dargestellte Schutzvorrichtung 1 weist in dem dargestellten Ausführungsbeispiel eine Abdeckeinrichtung 5 mit zwei Kanälen 51 und einer ersten, der Buchse abgewandten Oberfläche 54 auf. Ferner weist die Schutzvorrichtung 1 mindestens ein Sicherungselement auf, wobei das mindestens eine Sicherungselement in dem dargestellten Ausführungsbeispiel aus einer Schraube 7 gebildet ist. In dem dargestellten Ausführungsbeispiel wird die Abdeckeinrichtung 5 frontal auf den Gehäusekörper 31 der OBD-Diagnosebuchse 4 aufgesetzt, so dass ein Zugriff auf die elektrischen Kontakte 35 der OBD-Diagnosebuchse 4 nach Installation der Abdeckeinrichtung 5 verhindert wird. Die Befestigung der Abdeckeinrichtung 5 an der OBD-Diagnosebuchse 4 erfolgt dabei in dem dargestellten Beispiel über zwei Schrauben, welche durch die Kanäle 51 der Abdeckeinrichtung 5 hindurchgeführt und in dem Gehäusekörper 31 der OBD-Diagnosebuchse 4 verschraubt werden.

Die Fig. 2 zeigt die Schutzvorrichtung 1 an einer OBD-Diagnosebuchse 4 in einem Fahrzeug 2. Die Schutzvorrichtung 1 wird in dem dargestellten Beispiel aus der Abdeckeinrichtung 5 mit den beiden Schrauben 7 gebildet. Die Abdeckeinrichtung 5 ist der OBD-Diagnosebuchse 4 vorgelagert und versperrt den Zugriff auf die nicht dargestellten elektrischen Kontakte 35 der OBD-Diagnosebuchse 4. Bei installierter Schutzvorrichtung 1 kann ein Stecker 10 zum Zugriff auf die elektrischen Kontakte 35 (nicht dargestellt) nicht an die OBD-Diagnosebuchse 4 angeschlossen werden. Ein Zugriff auf die elektrischen Kontakte 35 wird somit durch die Schutzvorrichtung 1 verhindert. Die Schraubenkopfoberflächen 712 der Schrauben 7 sind in dem dargestellten Ausführungsbeispiel gegenüber der ersten, der OBD-Diagnosebuchse 4 abgewandten Oberfläche 54 der Abdeckeinrichtung vertieft angeordnet. Durch die zurückgezogene bzw. vertiefte Anordnung der Schraubenkopfoberfläche 712 bzw. des Schraubenkopfes 71 der Schrauben 7 wird ein Lösen bzw. Anziehen der Schrauben mittels einer handelsüblichen Zange oder mittels anderer handelsüblicher Werkzeuge verhindert.

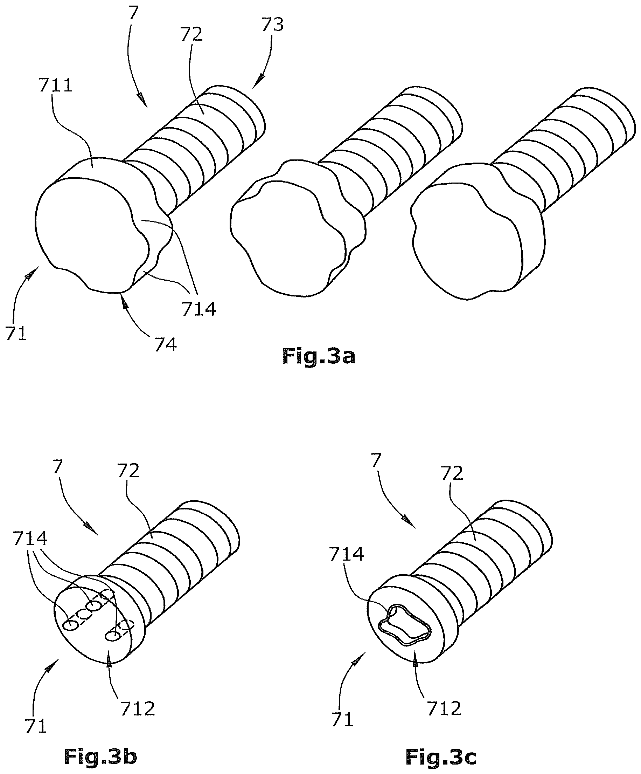

Die Fig. 3a zeigt ein erstes Ausführungsbeispiel einer mechanischen Kodierung der Schraube 7. Die Schraube 7 weist dabei im Bereich des vorderen Endes 74 einen Schraubenkopf 71 und im Bereich des einschraubbaren Endes 73 ein Außengewinde 72 auf. Der Schraubenkopf 71 wird dabei im Wesentlichen über einen zylindrischen Grundkörper mit einem Umfang 711 gebildet. Dabei ist die mechanische Kodierung der Schraube 7 über die Vorsehung von mehreren Ausnehmungen 714 an dem Umfang 711 des Schraubenkopfes 71 gebildet. Durch Variationen sowohl der Anzahl, der geometrischen Ausgestaltung bzw. Anordnung der Ausnehmungen 714 ist eine Vielzahl unterschiedlicher Konfigurationen der mechanischen Kodierung der Schraube 7 möglich. In der Fig. 3a sind drei unterschiedliche mechanische Kodierungen beispielhaft dargestellt.

Die Fig. 3b zeigt ein erstes alternatives Ausführungsbeispiel einer mechanischen Kodierung der Schraubenkopfes 7. Die Schraube 7 weist an dem vorderen Ende 74 einen Schraubenkopf 71 auf, der durch einen zylindrischen Grundkörper gebildet ist. Die Schraube 7 weist an dem einschraubbaren Ende 73 wiederum ein Außengewinde 72 auf. Der Schraubenkopf 71 ist dabei in dem dargestellten alternativen Ausführungsbeispiel gemäß Fig. 3b durch mehrere Ausnehmungen 714 an der Schraubenkopfoberfläche 712 mechanisch kodiert. Durch eine Variation der Anzahl sowie Größe, Kontur und Anordnung der Ausnehmungen 714 auf der Schraubenkopfoberfläche 712 kann eine Vielzahl von unterschiedlichen mechanischen Kodierungen gebildet werden.

Die Fig. 3c zeigt ein zweites alternatives Ausführungsbeispiel einer mechanisch kodierten Schraube 7 bzw. eines mechanisch kodierten Schraubenkopfes 71. Die mechanische Kodierung der Schraube 7 wird dabei über eine Ausnehmung 714 an der Schraubenkopfoberfläche 712 gebildet. Die Ausnehmung 714 weist dabei eine zusammenhängende Kontur und Form auf, durch entsprechende Variationen der Größe und geometrischen Ausgestaltung der Ausnehmung kann wiederum eine Vielzahl von unterschiedlichen mechanischen Kodierungen hergestellt werden.

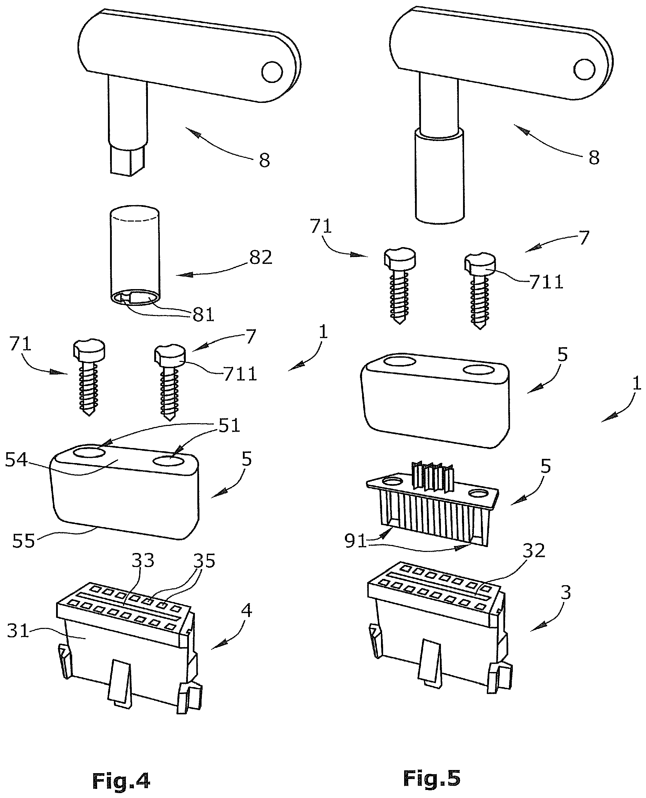

Die Fig. 4 zeigt eine schematische Darstellung zur Installation einer Schutzvorrichtung 1 an einer Buchse 3 eines in der Fig. 4 nicht dargestellten Fahrzeugs 2. Die Schutzvorrichtung 1 weist dabei in dem dargestellten Ausführungsbeispiel eine Abdeckeinrichtung 5 und mindestens ein Sicherungselement sowie einen Werkzeugschlüssel 8 auf. In dem dargestellten Ausführungsbeispiel sind zwei Sicherungselemente vorgesehen, wobei beide Sicherungselemente als Schrauben 7 ausgebildet sind.

Die fahrzeugseitige Buchse 3 wird durch einen Gehäusekörper 31 mit Vertiefungen 33 gebildet, worin die elektrischen Kontakte 35 angeordnet sind. Die Abdeckeinrichtung 5 weist eine erste, der Buchse 3 abgewandte Oberfläche 54 und eine zweite der Buchse 3 zugewandte Oberfläche 55 auf, wobei die Abmessung und Form der zweiten Oberfläche 55 an die Geometrie des Gehäusekörpers 31 der Buchse 3 angepasst ist. Die Abdeckeinrichtung 5 weist vorzugsweise zwei Kanäle 51 zur Aufnahme der beiden Schrauben 7 auf, die Abdeckeinrichtung 5 wird mittels der beiden durchgeführten Schrauben 7 in dem Gehäusekörper 31 der Buchse 3 verschraubt.

Die Schrauben 7 weisen einen mechanisch kodierten Schraubenkopf 71 durch Vorsehung von Ausnehmungen 714 am Umfang 711 des Schraubenkopfes 71 auf. Die Schrauben 7 können aufgrund der mechanischen Kodierung lediglich über einen entsprechend angepassten, mechanisch kodierten Werkzeugschlüssel 8 gelöst bzw. angezogen werden. Der mechanisch kodierte Werkzeugschlüssel 8 weist in dem dargestellten Ausführungsbeispiel einen Handgriff 83 auf, worüber ein Drehmoment zum Anziehen und/oder Lösen der Schrauben 7 erzeugt werden kann. Das Drehmoment wird von dem Handgriff 83 auf einen Hohlzylinder 82 mit Vorsprüngen 81 übertragen. Der Hohlzylinder 82 und die Vorsprünge 81 sind an den mechanisch kodierten Schraubenkopf 71 angepasst. Über die Vorsprünge 81 des Hohlzylinders 82 kann das über den Handgriff 83 erzeugte Drehmoment auf die Schraubköpfe 71 übertragen werden. Die Schrauben können dann mittels des Werkzeugs 8 in den Gehäusekörper 31 der Buchse 3 eingeschraubt werden, wobei gleichzeitig die Abdeckeinrichtung 5 vor der Buchse 3 befestigt wird.

Die Fig. 5 zeigt ein erfindungsgemäßes Ausführungsbeispiel einer Installationsanordnung einer Schutzvorrichtung 1 für eine fahrzeugseitige Buchse 3, wobei die Konfiguration grundsätzlich mit dem Ausführungsbeispiel gemäß Fig. 4 übereinstimmt, jedoch zur Installation der Schutzvorrichtung 1 zwischen der Abdeckeinrichtung 5 und der fahrzeugseitigen Buchse 3 ein zusätzlicher Verbindungskörper 9 angeordnet wird. Der Verbindungskörper 9 weist eine an die Buchse 3 angepasste Geometrie auf und weist in dem dargestellten Ausführungsbeispiel zwei Spreizkörper 91 auf. Bei der Installation der Abdeckeinrichtung 5 an der Buchse 3 wird zunächst der Verbindungskörper 9 in die vordere Aussparung 32 der Buchse 3 vorgesteckt. Darauffolgend wird die Abdeckeinrichtung 5 auf den vorgesteckten Verbindungskörper 9 aufgesetzt. Zur kraftschlüssigen Verbindung der Abdeckeinrichtung 5 mit der Buchse 3 werden darauffolgend die beiden Schrauben 7 mittels des Werkzeugschlüssels 8 befestigt. Bei dem Einschrauben der Schrauben 7 werden die Spreizkörper 91 des Verbindungskörpers 9 in der Aussparung 32 der Buchse 3 aufgeweitet. Durch das Aufweiten der Spreizkörper 91 in der Aussparung 32 der Buchse 3 wird ein kraftschlüssiger Verbund hergestellt.

## Patentansprüche

1. Schutzvorrichtung (1) für in Fahrzeugen (2) angeordnete elektrische Buchsen (3), insbesondere für OBD-Diagnosebuchsen (4), wobei die Buchsen (3) einen Gehäusekörper (31) mit elektrischen Kontakten (35) aufweisen,
wobei mindestens eine Abdeckeinrichtung (5) und mindestens ein Sicherungselement vorgegeben sind
wobei die Abdeckeinrichtung (5) mit Hilfe des Sicherungselements in dem Gehäusekörper (31) der fahrzeugseitigen Buchse (3) befestigbar ist, so dass die Abdeckeinrichtung (5) einen Zugriff auf die Kontakte (35) der Buchse (3) verhindert,
wobei das mindestens eine Sicherungselement mindestens eine Schraube (7) mit Schraubenkopf (71) ist, wobei in der Abdeckeinrichtung (5) mindestens ein Kanal (51) zur Aufnahme der mindestens einen Schraube (7) ausgebildet ist und wobei die Schraube (7) in den Gehäusekörper (31) der Buchse (3) einschraubbar ist und wobei die mindestens eine Schraube (7) einen mechanisch kodierten Schraubenkopf (71) aufweist,
**dadurch gekennzeichnet, dass** zwischen der Abdeckeinrichtung (5) und der Buchse (3) ein zusätzlicher Verbindungskörper (9) angeordnet ist, welcher einerseits in die Aussparungen (32) und/oder Vertiefungen (33) der Buchse (3) eingreift und andererseits an die Abdeckeinrichtung (5) angepasst ist, wobei an dem Verbindungskörper (9) mindestens ein an die mindestens eine Schraube (7) angepasster Spreizkörper (91) nach Art eines Spreizdübels ausgeprägt ist, wobei bei dem Befestigen der Abdeckeinrichtung (5) in dem Gehäusekörper (31) der Buchse (3) mittels Einschrauben der Schraube (7) der Spreizkörper (91) sich innerhalb einer Aussparung (32) oder Vertiefung (33) der Buchse (3) aufspreizt und mit dieser eine Reibschlussverbindung bildet.

2. Schutzvorrichtung (1) nach Anspruch 1, **dadurch gekennzeichnet, dass** sich die mindestens eine Schraube (7) bei dem erstmaligen Einschrauben in den Gehäusekörper (31) der Buchse (3) einschneidet.

3. Schutzvorrichtung (1) nach einem der vorhergehenden Ansprüche, **dadurch gekennzeichnet, dass** ein Werkzeugschlüssel (8) vorgesehen ist, mit dem das mindestens eine Sicherungselement lösbar und befestigbar ist.

4. Schutzvorrichtung (1) nach Anspruch 3, **dadurch gekennzeichnet, dass** der Werkzeugschlüssel (8) ein mechanisch kodierter Werkzeugschlüssel ist, der an den mechanisch kodierten Schraubenkopf (71) der mindestens einen Schraube (7) angepasst ist, so dass die mindestens eine Schraube (7) lediglich mit dem an den mechanisch kodierten Schraubenkopf (7) angepassten, mechanisch kodierten Werkzeugschlüssel (8) lösbar und anziehbar ist.

5. Schutzvorrichtung nach Anspruch 4, **dadurch gekennzeichnet, dass** der mechanisch kodierte Schraubenkopf (71) durch einen zylindrischen Körper mit mindestens einer an dem Umfang (711) des Schraubenkopfes (71) angeordneten Ausnehmung (714) gebildet ist und der mechanisch kodierte Werkzeugschlüssel (8) einen an den Umfang des Schraubenkopfes (71) angepassten Hohlzylinder (82) mit mindestens einem an die mindestens eine Ausnehmung (714) des Schraubenkopfes (71) angepassten Vorsprung (81) aufweist.

6. Schutzvorrichtung nach einem der Ansprüche 1 bis 5, **dadurch gekennzeichnet, dass** der Schraubenkopf (71) der mindestens einen Schraube (7) in der Abdeckeinrichtung (5) versenkt angeordnet ist, so dass die Schraubenkopfoberfläche (712) plan mit der der Buchse (3) abgewandten ersten Oberfläche (54) der Abdeckeinrichtung (5) oder gegenüber der ersten Oberfläche (54) der Abdeckeinrichtung (5) in Richtung der Buchse (3) zurückgezogen ist.

7. Schutzvorrichtung (1) nach einem der Ansprüche 1 bis 6, **dadurch gekennzeichnet, dass** die Abdeckeinrichtung (5) in dem mindestens einen Kanal (51) zur Aufnahme der Schraube (7) ein an das Außengewinde (72) der Schraube (7) angepasstes Innengewinde (52) aufweist, wobei das Innengewinde (52) ein Durchdrehen der Schraube (7) in dem Gehäusekörper (31) der Buchse (3) verhindert.

8. Schutzvorrichtung (1) nach einem der vorhergehenden Ansprüche, **dadurch gekennzeichnet, dass** die der Buchse (3) zugewandte zweite Oberfläche (55) der Abdeckeinrichtung (5) an die Form und Abmessungen der Buchse (3) angepasst ist.

9. Schutzvorrichtung (1) nach einem der vorhergehenden Ansprüche, **dadurch gekennzeichnet, dass**, die Schraube in Aussparungen (32) des Gehäusekörpers (31) einschraubbar ist..

10. Schutzvorrichtung (1) nach einem der vorhergehenden Ansprüche, **dadurch gekennzeichnet, dass** die Abdeckeinrichtung (5) den Gehäusekörper (31) der Buchse (3) seitlich umgreift.

11. Schutzvorrichtung nach einem der vorhergehenden Ansprüche, **dadurch gekennzeichnet, dass** die Abdeckeinrichtung (5) und/ oder das mindestens eine Sicherungselement aus einem Metall, vorzugsweise aus einem gehärteten Stahl gebildet ist.

12. Schutzvorrichtung (1) nach einem der vorhergehenden Ansprüche, **dadurch gekennzeichnet, dass** die Abdeckeinrichtung (5) zwei Kanäle (51) zur Aufnahme von zwei Sicherungselementen zur Befestigung der Abdeckvorrichtung (5) an dem Gehäusekörper (31) der Buchse (3) aufweist.

## Claims

1. Protective device (1) for protecting electric sockets (3) arranged in vehicles (2), particularly OBD diagnosis sockets (4), wherein the sockets (3) have a housing body (31) with electrical contacts (35),
wherein at least one cover assembly (5) and at least one safety element are specified,
wherein the cover assembly (5) can be fastened with the aid of the safety element in the housing body (31) of the sockets (3) on the vehicle side, such that the cover assembly (5) prevents an access to the contacts (35) of the socket (3),
wherein the at least one safety element is at least one screw (7) with a screw head (71), wherein in the cover assembly (5) is formed at least one channel (51) for receiving the at least one screw (7) and wherein the screw (7) can be screwed into the housing body (31) of the socket (3) and wherein the at least one screw (7) has a mechanically encoded screw head (71),
**characterised in that** between the cover assembly (5) and the socket (3) is arranged an additional connecting body (9) which on the one hand engages into the cutouts (32) and/or indentations (33) of the socket (3) and on the other hand is adapted to the cover assembly (5), wherein on the connecting body (9) is formed at least one spreading body (91) in the manner of a spreading dowel which is adapted to the at least one screw (7), wherein when fastening the cover assembly (5) in the housing body (31) of the socket (3) by means of screwing in the screw (7) the spreading body (91) spreads within a cutout (32) or indentation (33) of the socket (3) and forms a frictionally-fitting connection therewith.

2. Protective device (1) according to claim 1, **characterised in that** the at least one screw (7) cuts into the housing body (31) of the socket (3) when it is screwed in for the first time.

3. Protective device (1) according to any of the preceding claims, characterised that a tool key (8) is provided with which the at least one safety element can be released and fastened.

4. Protective device (1) according to claim 3, **characterised in that** the tool key (8) is a mechanically encoded tool key which is adapted to the mechanically encoded screw head (71) of the at least one screw (7), such that the at least one screw (7) can be released and tightened only with the mechanically coded tool key (8) which is adapted to the mechanically encoded screw head (7).

5. Protective device according to claim 4, **characterised in that** the mechanically encoded screw head (71) is formed by a cylindrical body having at least one cutout (714) arranged on the periphery (711) of the screw head (71) and the mechanically encoded tool key (8) has a hollow cylinder (82), adapted to the periphery of the screw head (71), having at least one protrusion (81) adapted to the at least one cutout (714) of the screw head (71).

6. Protective device according to any of claims 1 to 5, **characterised in that** the screw head (71) of the at least one screw (7) is arranged countersunk into the cover assembly (5), such that the screw head surface (712) is level with the first surface (54) of the cover assembly (5) which is averted from the socket (3) or is retracted in the direction of the socket (3) with respect to the first surface (54) of the cover assembly (5).

7. Protective device according to any of claims 1 to 6, **characterised in that** the cover assembly (5) has in the at least one channel (51) for receiving the screw (7) an inner thread (52) adapted to the outer thread (72) of the screw (7), wherein the inner thread (52) prevents the screw (7) from turning in the housing body (31) of the socket (3).

8. Protective device (1) according to any of the preceding claims, **characterised in that** the second surface (55) of the cover assembly (5) facing towards the socket (3) is adapted to the shape and dimensions of the socket (3).

9. Protective device (1) according to any of the preceding claims, **characterised in that** the screw can be screwed into cutouts (32) of the housing body (31).

10. Protective device (1) according to any of the preceding claims, **characterised in that** the cover assembly (5) engages laterally around the housing body (31) of the socket (3).

11. Protective device according to any of the preceding claims, **characterised in that** the cover assembly (5) and/or the at least one safety element is formed from a metal, preferably from a reinforced steel.

12. Protective device according to any of the preceding claims, **characterised in that** the cover assembly (5) has two channels (51) for receiving two safety elements for fastening the cover assembly (5) to the housing body (31) of the socket (3).

## Revendications

1. Dispositif de protection (1) pour des prises (3) électriques agencées dans des véhicules (2), en particulier pour des prises de diagnostic de type OBD (4), dans lequel les prises (3) présentent un corps de boîtier (31) avec des contacts (35) électriques,
dans lequel au moins un appareil de recouvrement (5) et au moins un élément de sécurité sont prédéfinis,
dans lequel l'appareil de recouvrement (5) peut être fixé à l'aide de l'élément de sécurité dans le corps de boîtier (31) de la prise (3) côté véhicule de sorte que l'appareil de recouvrement (5) empêche un accès aux contacts (35) de la prise (3),
dans lequel l'au moins un élément de sécurité est au moins une vis (7) avec une tête de vis (71), dans lequel dans l'appareil de recouvrement (5), au moins un canal (51) est réalisé pour la réception d'au moins une vis (7) et dans lequel la vis (7) peut être vissée dans le corps de boîtier (31) de la prise (3) et dans lequel l'au moins une vis (7) présente une tête de vis (71) codée de manière mécanique,
**caractérisé en ce qu'**un corps de liaison (9) supplémentaire est agencé entre l'appareil de recouvrement (5) et la prise (3), lequel vient en prise d'une part dans les évidements (32) et/ou cavités (33) de la prise (3) et est adapté d'autre part à l'appareil de recouvrement (5), dans lequel au moins un corps d'écartement (91) adapté à l'au moins une vis (7) est marqué comme une cheville d'écartement au niveau du corps de liaison (9), dans lequel lors de la fixation de l'appareil de recouvrement (5) dans le corps de boîtier (31) de la prise (3) au moyen du vissage de la vis (7) le corps d'écartement (91) s'écarte au sein d'un évidement (32) ou une cavité (33) de la prise (3) et forme avec celle-ci une liaison à frottement.

2. Dispositif de protection (1) selon la revendication 1, **caractérisé en ce que** l'au moins une vis (7) s'entaille lors du premier vissage dans le corps de boîtier (31) de la prise (3).

3. Dispositif de protection (1) selon l'une quelconque des revendications précédentes, **caractérisé en ce qu'**une clé d'outil (8) est prévue, avec laquelle l'au moins un élément de sécurité peut être détaché et fixé.

4. Dispositif de protection (1) selon la revendication 3, **caractérisé en ce que** la clé d'outil (8) est une clé d'outil codée de manière mécanique, qui est adaptée à la tête de vis (71) codée de manière mécanique d'au moins une vis (7) de sorte que l'au moins une vis (7) puisse être détachée et serrée seulement avec la clé d'outil (8) codée de manière mécanique, adaptée à la tête de vis (7) codée de manière mécanique.

5. Dispositif de protection selon la revendication 4, **caractérisé en ce que** la tête de vis (71) codée de manière mécanique est formée par un corps cylindrique avec au moins un évidement (714) agencé au niveau de la périphérie (711) de la tête de vis (71) et la clé d'outil (8) codée de manière mécanique présente un cylindre creux (82) adapté à la périphérie de la tête de vis (71) avec au moins une saillie (81) adaptée à l'au moins un évidement (714) de la tête de vis (71).

6. Dispositif de protection (1) selon l'une quelconque des revendications 1 à 5, **caractérisé en ce que** la tête de vis (71) d'au moins une vis (7) est agencée de manière noyée dans l'appareil de recouvrement (5) de sorte que la surface de tête de vis (712) soit retirée de manière plane avec la première surface (54) éloignée de la prise (3) de l'appareil de recouvrement (5) ou par rapport à la première surface (54) de l'appareil de recouvrement (5) en direction de la prise (3).

7. Dispositif de protection (1) selon l'une quelconque des revendications 1 à 6, **caractérisé en ce que** l'appareil de recouvrement (5) dans l'au moins un canal (51) pour la réception de la vis (7) présente un filet intérieur (52) adapté au filet extérieur (72) de la vis (7), dans lequel le filet intérieur (52) empêche un outrepassement de la vis (7) dans le corps de boîtier (31) de la prise (3).

8. Dispositif de protection (1) selon l'une quelconque des revendications précédentes, **caractérisé en ce que** la seconde surface (55) tournée vers la prise (3) de l'appareil de recouvrement (5) est adaptée à la forme et aux dimensions de la prise (3).

9. Dispositif de protection (1) selon l'une quelconque des revendications précédentes, **caractérisé en ce que** la vis peut être vissée dans des évidements (32) du corps de boîtier (31).

10. Dispositif de protection (1) selon l'une quelconque des revendications précédentes, **caractérisé en ce que** l'appareil de recouvrement (5) entoure latéralement le corps de boîtier (31) de la prise (3).

11. Dispositif de protection selon l'une quelconque des revendications précédentes, **caractérisé en ce que** l'appareil de recouvrement (5) et/ou l'au moins un élément de sécurité est formé d'un métal, de préférence d'un acier durci.

12. Dispositif de protection (1) selon l'une quelconque des revendications précédentes, **caractérisé en ce que** l'appareil de recouvrement (5) présente deux canaux (51) pour la réception de deux éléments de sécurité pour la fixation du dispositif de recouvrement (5) au corps de boîtier (31) de la prise (3).
